# EUROPÄISCHE PATENTANMELDUNG

(11) **EP 3 112 842 A1**
(43) Veröffentlichungstag der Anmeldung: **04.01.2017**
(21) Anmeldenummer: 15174611.2
(22) Anmeldetag: 30.06.2015
(51) Int. Cl.: G01N 21/03, G01N 23/22

(54) **EXPERIMENTIERZELLE ZUR UNTERSUCHUNG VON FLUID-GRENZSCHICHTEN**

(71) Anmelder: Bundesrepublik Deutschland, vertreten durch das Bundesmisterium für Wirtschaft und Energie, endvertreten durch den Präsidenten der PTB, 38116 Braunschweig (DE); Technische Universität Berlin, 10623 Berlin (DE)
(72) Erfinder: Nutsch, Andreas, 90425 Nürnberg (DE); Streeck, Cornelia, 13189 Berlin (DE); Hornemann, Andrea, 10781 Berlin (DE); Beckhoff, Burkhard, 10439 Berlin (DE); Grötzsch, Daniel, 10369 Berlin (DE); Malzer, Wolfgang, 10405 Berlin (DE)
(74) Vertreter: Plöger, Jan Manfred

(57) **Zusammenfassung**

Die Erfindung betrifft eine Experimentierzelle (10), die ausgebildet ist zum Verbinden mit einer Spektroskopie-Vorrichtung, zur Untersuchung von Fluiden und/oder Fluid-Grenzschichten (20), mit einem geschlossenen Probenraum (14) zum Aufnehmen eines Probe-Fluids (12), insbesondere eines Probe-Gases oder einer Probe-Flüssigkeit, und zumindest einem Fenster (18), das für elektromagnetische Strahlung durchsichtig ist. Erfindungsgemäß ist eine Druckeinstellvorrichtung (28) zum Einstellen des Drucks (p₁₄) im Probenraum (14) vorgesehen.

## Beschreibung

Die Erfindung betrifft eine Experimentierzelle zur Untersuchung von Fluid-Grenzschichten, mit (a) einem geschlossenen Proberaum zum Aufnehmen eines Probe-Fluids, insbesondere eines Probe-Gases oder einer Probe-Flüssigkeit und (b) einem Fenster, das für elektromagnetische Strahlung durchsichtig ist. Die Experimentierzelle ist ausgebildet zum Verbinden mit einer Spektroskopie-Vorrichtung. Das heißt, dass die Experimentierzelle mit einer Spektroskopie-Vorrichtung so verbindbar ist, dass spektroskopische Experimente durchgeführt werden können.

Eine derartige Experimentierzelle wird in der In-Situ-Spektroskopie verwendet und könnte daher auch als In-Situ-Messzelle bezeichnet werden. Die In-Situ-Spektroskopie wird zur physikalisch-chemischen und bio-chemischen Analytik eingesetzt und untersucht die Wechselwirkung von elektromagnetischer Strahlung mit einem Fluid und/oder mit einer Fluid-Grenzfläche. Dazu wird die Grenzfläche mit Vakuum-Ultraviolett-Strahlung, Röntgenstrahlung oder Infrarot-Strahlung bestrahlt und die transmittierte und/oder reflektierte Strahlung gemessen.

Es ist oft notwendig, die Strahlung im Vakuum zu erzeugen, beispielsweise in Form von Synchrotron-Strahlung, und/oder die Strahlung durch evakuierte Bauteile zu leiten, bevor sie auf die Probe treffen. Da es nicht möglich ist, Fluide in einem hohen Vakuum zu halten, werden Fenster verwendet, die das Fluid vom Vakuum trennen und die gleichzeitig durchsichtig für die verwendete Strahlung und die zu detektierende Reaktion des Probensystems auf die Strahlung sind.

Zum Erreichen der nötigen Transparenz ist es wünschenswert, dass dieses Fenster besonders dünn ist, dann aber wölbt sich das Fenster, was unerwünscht ist. Es muss daher ein Kompromiss zwischen einem dünnen Fenster und einer tolerierbaren Wölbung gefunden werden.

Der Erfindung liegt die Aufgabe zu Grunde, Nachteile im Stand der Technik zu verringern.

Die Erfindung löst das Problem durch eine gattungsgemäße Experimentierzelle, die eine Druckeinstellvorrichtung zum Einstellen des Drucks im Probenraum aufweist. Gemäß einem zweiten Aspekt löst die Erfindung das Problem durch ein In-Situ-Spektroskopierverfahren mit den Schritten (a) Einbringen eines Probe-Fluids in den Proberaum einer erfindungsgemäßen Experimentierzelle und (b) Verringern in der Experimentierzelle mittels der Druckeinstellvorrichtung, insbesondere Verschließen der Zelle, wobei der Druck in der Experimentierzelle mittels der Druckeinstellvorrichtung in der Experimentierzelle verringert wird. Vorzugsweise umfasst das Verfahren den Schritt: (c) Anlegen eines Vakuums an eine dem Fluid abgewandte Seite des Fensters, sowie Durchführen einer spektroskopischen Messung an dem Fluid durch Bestrahlen des Fensters mittels elektromagnetischer Strahlung.

Vorteilhaft an der Erfindung ist, dass ein dünnes Fenster verwendet werden kann. Durch die Druckeinstellvorrichtung kann der Druck im Probenraum stets so von Hand oder per Motor, insbesondere per Piezoantrieb, optimal eingestellt werden.

Es ist möglich und stellt eine bevorzugte Ausführungsform dar, zunächst mittels der Druckeinstellvorrichtung einen geringeren Druck als den Umgebungsdruck einzustellen. Dadurch wölbt sich das Fenster zum Fluid hin. Wird danach die Experimentierzelle mit ihrem Fenster an ein externes Vakuum angeschlossen, so wölbt sich das Fenster nach außen. Die Druckdifferenz zum äußeren Vakuum ist jedoch deutlich kleiner als in dem Fall, dass keine Druckeinstellung vorhanden ist und damit keine Druckreduktion vorgenommen werden kann. In anderen Worten kann das Fenster so ausgelegt werden, dass es lediglich einer geringeren Druckdifferenz standhält als der Druckdifferenz zwischen Umgebungsdruck und dem Vakuum.

Vorteilhaft ist zudem, dass die Krümmung des Fensters mittels der Druckeinstellvorrichtung veränderbar ist. So ist es möglich, die Experimentierzelle mit unterschiedlichen Probe-Fluiden zu beaufschlagen und dennoch stets die gleiche Krümmung des Fensters zu haben. Das führt zu besser vergleichbaren Ergebnissen.

Im Rahmen der vorliegenden Beschreibung wird unter dem Merkmal, dass der Proberaum geschlossen ist, insbesondere verstanden, dass er eine Leckrate von höchstens 10⁻¹⁰ mbar Liter pro Sekunde erreicht. Selbstverständlich ist eine vollständige Dichtigkeit niemals erreichbar, maßgeblich ist, dass etwaige Leckraten so klein sind, dass sie vernachlässigt werden können.

Unter dem Probenraum wird insbesondere ein Raum verstanden, dessen Volumen kleiner ist als 100 Milliliter.

Unter dem Probe-Fluid wird ein zu untersuchendes Gas, eine zu untersuchende Flüssigkeit oder Lösung oder Suspension verstanden.

Unter dem Merkmal, dass das Fenster für elektromagnetische Strahlung durchsichtig ist, wird insbesondere verstanden, dass ein für die Messaufgabe vorgesehener Wellenlängenbereich existiert und dass das Fenster in diesem Wellenlängenintervall eine Transmission von zumindest 5%, insbesondere zumindest 10%, besitzt. Es ist möglich, nicht aber notwendig, dass das Fenster für elektromagnetische Strahlung eines weiten Wellenlängenbereiches durchsichtig ist. Vorzugsweise ist das Fenster für Terahertz-Strahlen und/oder Infrarot-Strahlung und/oder sichtbares Licht und/oder Ultraviolettlicht und/oder Röntgenlicht durchsichtig.

Gemäß einer bevorzugten Ausführungsform besitzt die Messzelle eine Krümmungs-Messvorrichtung zum Messen einer Krümmung des Fensters. Diese Krümmungs-Messvorrichtung kann beispielsweise einen Laser aufweisen, der einen Laserstrahl auf das Fenster richtet, sowie einen Detektor, der den von dem Fenster reflektierten oder transmittierten Strahlort aufgelöst misst. Aus dem Auftreffpunkt dieses Laserstrahls kann auf die Krümmung geschlossen werden. Aus dem Stand der Technik sind mehrere Verfahren zum Bestimmen der Krümmung bekannt, sodass hier nicht weiter darauf eingegangen wird.

Gemäß einer bevorzugten Ausführungsform ist die Druckeinstellvorrichtung ausgebildet zum Einstellen des Drucks auf 1 Hektopascal (entspricht 10 mbar) genau.

Gemäß einer bevorzugten Ausführungsform umfasst die Druckeinstellvorrichtung ein Stellelement, mittels dem das Volumen des Probenraums veränderbar ist. Beispielsweise wirkt das Stellelement auf einen Zylinder, sodass ein Volumen des Proberaumes veränderbar ist. In anderen Worten ist das Stellelement in diesem Fall so ausgebildet, dass es auf einen Kolben wirkt, der in einem Zylinder läuft. Wird das Stellelement bedient, so ändert sich die Lage des Kolbens relativ zum Zylinder. Das Zylindervolumen wird als zum Probenraum gehörig betrachtet. Alternativ kann das Stellelement beispielsweise als Schraube ausgebildet sein. Eine derartige Druckeinstellvorrichtung hat den Vorteil, dass sie besonders feine Druckänderungen bewirken kann.

Das Stellelement kann beispielsweise ein Piezo-Element oder eine Justierschraube umfassen. Ein Piezo-Element hat den Vorteil, elektrisch ansteuerbar zu sein, sodass die Druckeinstellvorrichtung als Druckregelung - wie gemäß einer bevorzugten Ausführungsform vorgesehen - ausgebildet sein kann. Eine Druckregelung umfasst eine Druckmessvorrichtung und ist ausgebildet zum Einregeln des Drucks im Probenraum auf einen vorgegebenen Soll-Druck.

Alternativ oder zusätzlich umfasst die Experimentierzelle vorzugsweise eine Membran, die mit dem Probenraum und einer Umgebung der Experimentierzelle in Verbindung steht, sodass sich der Druck im Probenraum dem Umgebungsdruck anpasst. Unter der Membran wird dabei ein Bauteil verstanden, das so dünn ist, dass es sich bei einer Druckdifferenz zwischen dem Probenraum und der Umgebung deformiert und die Druckdifferenz vermindert. Insbesondere ist die Membran so dünn ausgebildet, dass eine Druckdifferenz zwischen einem mit entgastem Wasser gefüllten Probenraum und einem Umgebungsdruck von 1 mbar dazu führt, dass sich im Innenraum ein Druck von höchstens 50 mbar einstellt.

Günstig ist es, wenn der Probenraum atmosphären- und vakuumkompatibel verschließbar ausgebildet ist. Hierunter wird insbesondere verstanden, dass eine Leckrate höchstens 10⁻¹⁰ mbar Liter pro Sekunde beträgt.

Es ist günstig, wenn das Fenster austauschbar ausgebildet ist. Es ist dann leicht möglich, ein etwaig geborstenes Fenster zu ersetzen.

Vorzugsweise hat das Fenster eine Dicke von höchstens 200 µm, vorzugsweise höchstens 200 nm. Eine derartige Dicke ist ohne das Vorhandensein einer Druckeinstellvorrichtung kaum realisierbar. Günstig ist es, wenn das Fenster in einem Rahmen, beispielsweise in einem Siliziumwafer, gehalten ist. Vorzugsweise beträgt eine Größe des Fensters, ggf. mit dem Rahmen, zumindest 25 Quadratmillimeter. Vorzugsweise beträgt die Größe weniger als 15 x 15 Millimeter. Günstig ist es, wenn das Fenster bei einem Druckunterschied zwischen Probenraum und Umgebung von über 50 mbar eine Auslenkung von zumindest 1 Mikrometer hat.

Es ist günstig wenn das Fenster auf seiner dem Probenraum zugewandten Seite eine strukturierte Beschichtung aufweist. Diese Beschichtung kann die Stabilität des Fensters erhöhen. Vorzugsweise ist die Beschichtung so ausgebildet, dass sie mit der anregenden elektromagnetischen Strahlung wechselwirkt, so dass die elektromagnetische Strahlung lokal an der Grenzfläche zwischen Fenster mit den darauf befindlichen Strukturen und Probe-Fluid verstärkt wird. Hierbei ist insbesondere die Einstellung einer geringen Wölbung vorteilhaft. Die Beschichtung kann dabei vertikal oder lateral durch Schichten von wenigen 0,1 Nanometern oder bis zu 100 Mikrometern aus unterschiedlichen Materialien bestehen.

Insbesondere stellt die Beschichtung die Eigenspannung des Fensters ein. Die Beschichtung kann durch eine Multischicht aus mehreren nanoskaligen Schichten, die einen hohen elektronischen Dichteunterschied aufweisen, gebildet sein. Alternativ kann die Beschichtung durch eine nanoskalige Einzel- oder Multischicht, die zusätzlich lateral (parallel zur Fensteroberfläche) strukturiert ist, beispielsweise durch Gräben, gebildet sein. Wiederum alternativ ist die Beschichtung durch lateral verteilte Nanostrukturen (z.B. Nanopartikel oder lithografisch hergestellte Strukturen) gebildet. Vorzugsweise ist die Beschichtung ausgebildet zur plasmonischen Verstärkung.

Vorzugsweise umfasst die Experimentierzelle eine Temperaturregelung zum Regeln einer Temperatur des Probe-Fluids auf eine vorgegebene Soll-Temperatur. Eine derartige Temperaturregelvorrichtung dient dem Einstellen der Temperatur und dem Halten der Temperatur und erlaubt beispielsweise die Untersuchung von Proteinen mit hoher Genauigkeit, da Temperatureinflüsse ausgeschlossen werden können. Eine Temperaturregelung ist besonders vorteilhaft, wenn die Druckeinstellvorrichtung eine Druckregelvorrichtung ist, die den Druck im Probenraum auf einen vorgegebenen Soll-Druck regelt. Eine Änderung der Temperatur führt in der Regel zu einer Druckänderung. Durch das Regeln sowohl der Temperatur als auch des Drucks ist die Wölbung des Fensters besonders gut und konstant haltbar.

Gemäß einer bevorzugten Ausführungsform umfasst die Experimentierzelle eine elektrische Kontaktierung des Innenraums. Insbesondere ist die elektrische Kontaktierung so ausgebildet, dass das Probe-Fluid einem elektrischen Feld ausgesetzt werden kann. Das ermöglicht zum Beispiel die Untersuchung von Lade- und Entladevorgängen an elektrischen Energiespeichermedien und/oder anderen elektrochemischen Prozessen.

Besonders günstig ist es, wenn das Fenster eine elektrisch leitfähige Beschichtung auf seiner Fensterinnenseite aufweist, die mit der elektrischen Kontaktierung elektrisch verbunden ist.

Erfindungsgemäß ist zudem eine Spektroskopie-Vorrichtung mit (i) einer Strahlungsquelle zum Abgeben von elektromagnetischer Strahlung, (ii) einer erfindungsgemäßen Experimentierzelle, deren Fenster für diese elektromagnetische Strahlung der Strahlungsquelle durchsichtig ist, und (iii) einem Detektor zum Erfassen von Strahlung, die durch das Fenster eingetreten ist und mit dem Probe-Fluid in Wechselwirkung getreten ist. Bei der Strahlungsquelle handelt es sich beispielsweise um eine Infrarotstrahlungsquelle, eine Röntgenquelle, eine Quelle für Vakuumultraviolettlicht und/oder eine Terahertzstrahlungsquelle. Besonders günstig ist es, wenn die Strahlungsquelle eine Synchrotron-Strahlungsquelle ist.

Es ist möglich, nicht aber notwendig, dass das Fenster für sämtliche Frequenzen, die von der Strahlungsquelle abgegeben werden, durchsichtig ist. Es ist ausreichend, wenn das Fenster zumindest für einen Teil der Strahlung der Strahlungsquelle durchsichtig ist.

Gemäß einer bevorzugten Ausführungsform besitzt die Experimentierzelle ein zweites Fenster, das für die Strahlung durchsichtig ist, wobei die Strahlungsquelle zum Durchstrahlen des ersten Fensters und des zweiten Fensters angeordnet ist und wobei die Spektroskopie-Vorrichtung eine Detektorvorrichtung zum Erfassen von Strahlung, die durch das erste Fenster eingetreten und im zweiten Fenster ausgetreten ist, umfasst. So lassen sich Experimente in Transmissionsanordnung durchführen. Es ist möglich und stellt eine bevorzugte Ausführungsform dar, dass die Detektorvorrichtung durch den Detektor gebildet ist. In diesem Fall ist es günstig, wenn die Spektroskopie-Vorrichtung zwei Probenaufnahmen für den Detektor aufweist, nämlich eine, die so angeordnet ist, dass der Detektor in Reflexionsstellung zum Messen von Fluiden und/oder von Fluid-Grenzschichten reflektierter Strahlung, und eine, die so angeordnet ist, dass der Detektor in Transmissionsstellung zum Messen transmittierter Strahlung ist.

Die Spektroskopie-Vorrichtung ist vorzugsweise so ausgebildet, dass sie auch im Vakuum betreibbar ist. Das Fenster trennt dabei das Probenvolumen von der Vakuumkammer. Vorzugsweise umfasst die Spektroskopie-Vorrichtung eine Vakuumkammer, wobei das Fenster zwischen der Vakuumkammer und dem Probenraum angeordnet ist. Unter einer Vakuumkammer wird eine Kammer verstanden, an die ein Vakuum von zumindest 1000 Pascal anlegbar ist, ohne dass sie zerstört wird. Alternativ oder zusätzlich umfasst die Spektroskopie-Vorrichtung eine Schutzgaskammer, die mit einem Schutzgas, beispielsweise einem Edelgas, gefüllt ist.

Es ist möglich, dass die Strahlungsquelle in der Vakuumkammer angeordnet ist. Alternativ umfasst zusätzlich die Vakuumkammer ein Kammer-Fenster, das so zur Strahlungsquelle ausgerichtet ist, dass die Strahlung von der Strahlungsquelle durch das Kammer-Fenster zum ersten Fenster gelangen kann. Es ist möglich, zunächst die Strahlungsquelle mit der Vakuumkammer zu verbinden, danach die Vakuumkammer zu evakuieren und gegebenenfalls gleichzeitig den Druck im Probenraum abzusenken, sodass die Belastung des Fensters verringert wird. Dieses Vorgehen ist besonders dann sinnvoll, wenn die Strahlungsquelle selbst ein Vakuum erfordert.

Alternativ ist es möglich, dass die Experimentierzelle einen ultrahochvakuumfähigen Verbindungsflansch besitzt. Dieser erstreckt sich vorzugsweise entlang einer Ebene, die zumindest im Wesentlichen parallel zur Fensterebene des ersten Fensters verläuft. Eine Abweichung von der strengen Parallelität zwischen Fensterebene und Verbindungsflansch von beispielsweise 5% ist tolerierbar. Mit einem derartigen Verbindungsflansch kann die Experimentierzelle an eine Strahlungsquelle angeschlossen werden, die nur im Ultrahochvakuum betrieben werden kann.

Im Rahmen eines erfindungsgemäßen Verfahrens ist der Innendruck der Experimentierzellen vor dem Anlegen des Vakuums an der dem Fluid abgelegenen Seite des Fensters vorzugsweise kleiner als der Umgebungsdruck. Auf diese Weise ist die Druckdifferenz, die maximal am Fenster anliegt, verringerbar.

Im Folgenden wird die Erfindung anhand der beigefügten Zeichnungen näher erläutert. Dabei zeigt
- Figur 1a: eine schematische Ansicht einer erfindungsgemäßen Spektroskopie-Vorrichtung in Reflexions- und Fluoreszenzgeometrie gemäß einer ersten Ausführungsform,
- Figur 1b: schematisch eine Spektroskopie-Vorrichtung, die zudem in Transmissionsgeometrie betreibbar ist, gemäß einer zweiten Ausführungsform der Erfindung,
- Figur 2a: eine perspektivische Schnittansicht einer erfindungsgemäßen Experimentierzelle und
- Figur 2b: eine perspektivische Ansicht der Experimentierzelle gemäß Figur 2a.
- Figur 3a: zeigt eine perspektivische Ansicht eines Schnitts durch eine erfindungsgemäße Spektroskopie-Vorrichtung,

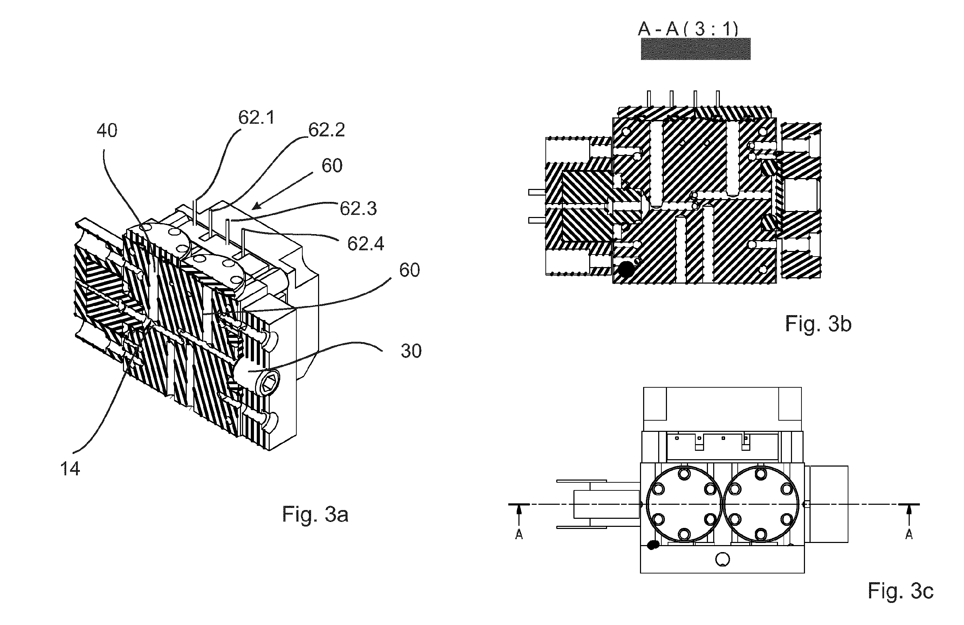

- Figur 3: zeigt eine Draufsicht auf die Schnittfläche gemäße Figur 3a und
- Figur 3c: zeigt eine Ansicht von oben.

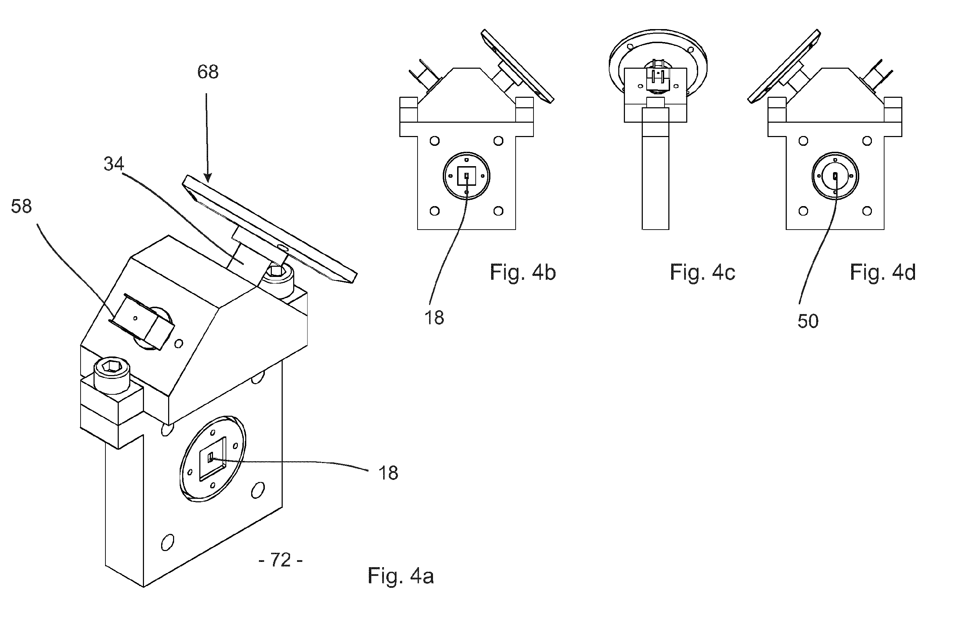

- Figur 4a: zeigt eine perspektivische Ansicht einer zweiten Ausführungsform einer erfindungsgemäßen Experimentierzelle, und die
- Figuren 4b, 4c und 4d: zeigen Ansichten von der Seite.

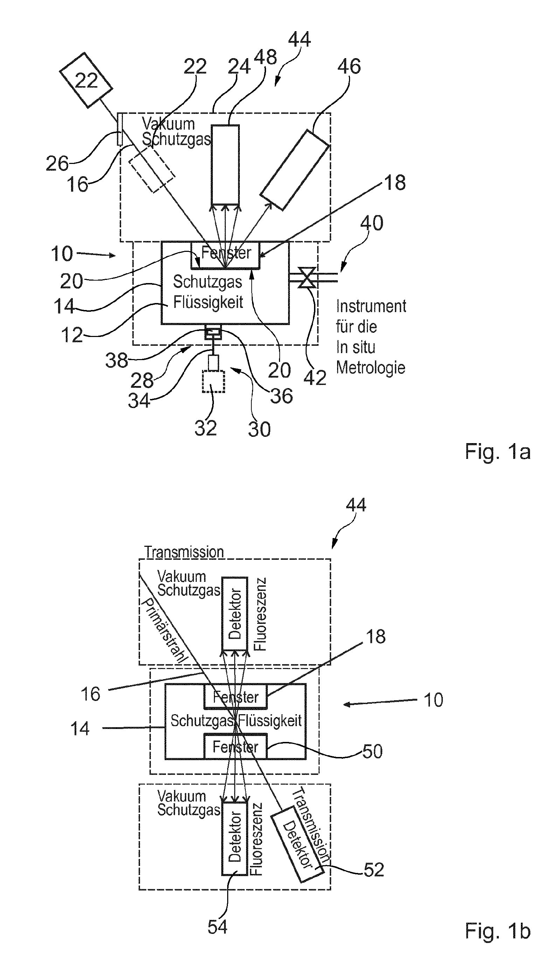

Figur 1a zeigt eine schematische Ansicht einer erfindungsgemäßen Experimentierzelle 10 zur Untersuchung einer Fluid-Grenzschicht zwischen einem Probe-Fluid 12, das in einem geschlossenen Proberaum 14 angeordnet ist und mittels elektromagnetischer Strahlung 16, die in einem Primärstahl durch ein Fenster 18 zugeführt wird. An dem Fenster 18 bildet sich eine Fluid-Grenzschicht 20.

Die elektromagnetische Strahlung 16 wird von einer Strahlungsquelle 22 abgegeben, die innerhalb einer Vakuumkammer 24 angeordnet sein kann. Eine derartige Strahlungsquelle ist schematisch gestrichelt eingezeichnet. Es ist aber auch möglich, dass - wie in Figur 1a gezeigt - die Strahlungsquelle 22 wie mit durchgezogener Linie gezeichnet außerhalb der Vakuumkammer 24 angeordnet ist. In diesem Fall besitzt die Vakuumkammer 24 ein Kammer-Fenster 26, das zumindest für einen Teil der elektromagnetischen Strahlung 16 durchsichtig ist.

Die Experimentierzelle 10 umfasst eine Druckeinstellvorrichtung 28, mittels der ein Druck p₁₄ im Probenraum einstellbar ist.

Die Druckeinstellvorrichtung 28 besitzt ein Stellelement 30, das eine Gewindespindel 34 antreibt. Dazu kann ein schematisch eingezeichneter Motor 32 vorhanden sein, das ist aber nicht notwendig. Die Gewindespindel 34 wirkt auf einen Zylinder 36. Dazu ist die Gewindespindel 34 mit einem Kolben 38 verbunden, der in einem Zylinderinnenraum läuft. Wird der Motor 32 betätigt, bewegt sich der Kolben 38 im Zylinderinnenraum und verändert so ein Volumen V₁₄ des Proberaumes 14.

Der Probenraum 14 umfasst eine Zuleitung 14 zum Zu- und Ableiten des Probe-Fluids 12. Die Zuleitung 40 kann ein Ventil 42 zum vakuumdichten Abschließen des Probenraums 14 aufweisen, das ist aber nicht notwendig.

Die Experimentierzelle 10 und die Strahlungsquelle 22 sind Bestandteil einer erfindungsgemäßen Spektroskopie-Vorrichtung 44. Die Spektroskopie-Vorrichtung 44 umfasst zudem einen Detektor 46, mittels dem elektromagnetische Strahlung detektiert werden kann, die mit der Fluid-Grenzschicht 20 in Wechselwirkung getreten ist. Die Spektroskopie-Vorrichtung 44 kann zudem eine Detektorvorrichtung 48 aufweisen, mittels der Fluoreszenzstrahlung von der Fluid-Grenzschicht 20 erfasst werden kann. Beispielsweise handelt es sich bei der Detektorvorrichtung 48 um einen zweiten Detektor. Alternativ kann die Detektorvorrichtung 48 auch durch den Detektor 46 gebildet sein, der zum Messen der Fluoreszenzstrahlung umgesetzt wurde und/oder die reflektierte Strahlung misst.

Figur 1b zeigt eine zweite Ausführungsform einer erfindungsgemäßen Experimentierzelle 10, die ein zweites Fenster 50 aufweist, dass so relativ zum Primärstahl 16 angeordnet ist, dass eine Messung in Transmissionsanordnung möglich ist. Dazu besitzt die Experimentierzelle 10 einen dritten Detektor 52 zum Detektieren von Transmissions-Strahlung und einen vierten Detektor 54 zum Erfassen von Fluoreszenz-Strahlung, der aber nicht notwendig ist.

Bei der Strahlungsquelle 22 kann es sich beispielsweise um eine Infrarot-, Ultraviolett-, oder Röntgenquelle, sowie um eine Quelle sichtbaren Lichts oder um eine Synchrotronlichtquelle handeln. Die Auswahl der jeweiligen Lichtquelle hängt von der geplanten spektroskopischen Untersuchung ab. Die Fenster sind jeweils für die gewählte elektromagnetische Strahlung durchsichtig.

Bei den Detektoren 46, 48, 52, 54 handelt es sich vorzugsweise um energiedispersive Detektoren oder Spektrometer. Mit diesen Detektoren werden die energetische Lage von Absorptionslinien, -Banden oder anderen Absorptionsmustern, sowie die Fluoreszenzlinien messbar, was eine Qualifizierung hinsichtlich der chemischen Elemente oder Bindungen in der Fluid-Grenzschicht 20 erlaubt. Wenn es sich bei der Strahlungsquelle 22 um eine Röntgenquelle handelt, ist diese vorzugsweise eingerichtet zum Abgeben von Röntgenstrahlen einer vorgebbaren Wellenlänge, sodass die elektrischen Zustände der Atome oder Moleküle in der Fluid-Grenzschicht ermittelbar sind.

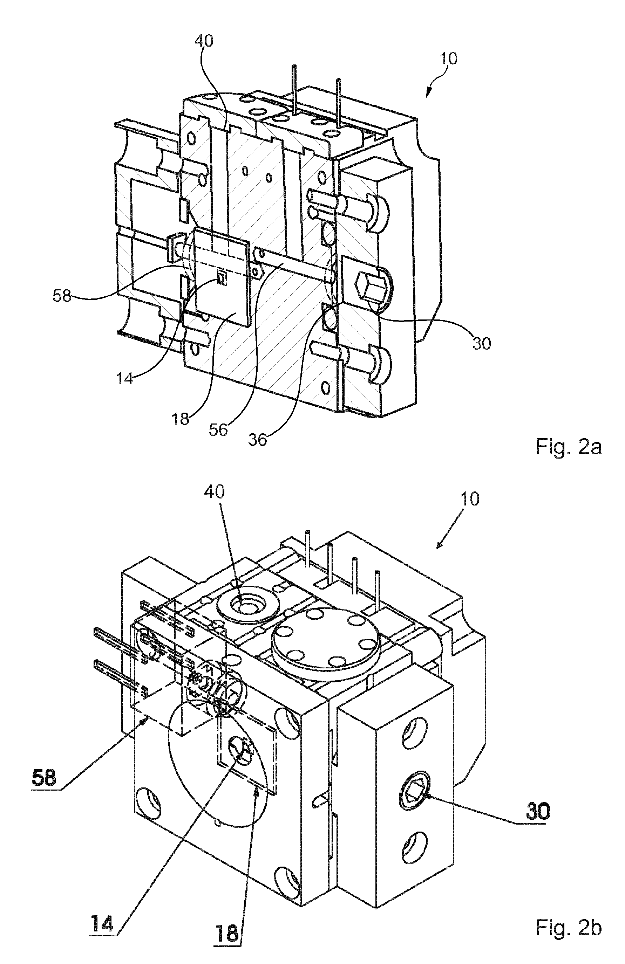

Figur 2a zeigt eine perspektivische Ansicht einer erfindungsgemäßen Experimentierzelle 10. Der Probenraum 14 ist von dem Fenster 18 abgedeckt. Das Fenster 18 ist aus Si3N4 aufgebaut, alternativ kann das Fenster beispielsweise auch aus Siliziumkarbid oder Diamant aufgebaut sein und hat im vorliegenden Fall eine Dicke von d = 100nm. Es ist möglich, dass das Fenster mehrere Schichten aufweist, die beispielsweise dazu dienen, die Ausbildung der Fluid-Grenzschicht zu beeinflussen.

In der Ausführungsform gemäß Figur 2a ist das Stellelement 30 durch eine Stellschraube gebildet. Durch Drehen lässt sich das Volumen V₁₄ des Probenraums 14 verändern. Dazu ist der Zylinder 36 über einen Kanal 56 in dem Bereich mit Probenraums 14 verbunden, der von dem Fenster 18 abgedeckt ist.

Die Experimentierzelle 10 umfasst einen Drucksensor 58 zum Messen des Drucks p₁₄ im Probenraum 14. So ist es möglich, nicht aber notwendig, dass der Drucksensor ein elektrisches Signal abgibt. Es ist auch möglich, dass der Drucksensor 58 eine ablesbare Skala aufweist, sodass ein Bediener durch Drehen am Stellelement 30 den Druck p₁₄ auf einen Soll-Druck einstellen kann. Der Drucksensor 58 kann so angeordnet sein, dass er den Druck p₁₄ als Differenzdruck zu einem Druck p₂₄ der Vakuumkammer 24 (vergleiche Figur 1a) angibt.

Die Experimentierzelle 10 ist mit der Vakuumkammer 24 hochvakuumfähig verbunden. In der Vakuumkammer kann daher ein Druck von weniger als 0,1 Pa eingestellt werden. In einer alternativen Ausführungsform ist es auch möglich, dass die Vakuumkammer teilweise fest mit der Experimentierzelle 10 verbunden ist und ihrerseits geöffnet und vakuumdicht verschlossen werden kann, sodass das Fenster 18 ausgetauscht werden kann.

Zum Durchführen eines erfindungsgemäßen Verfahrens wird zunächst Probe-Fluid in den Probenraum 14 der Experimentierzelle 10 eingebracht. Danach wird die Experimentierzelle 10 mit der Vakuumkammer 24 verbunden. Nachfolgend wird die Vakuumkammer 24 evakuiert und gleichzeitig dazu mittels des Stellelements 30 der Druck p_{14'} im Probenraum 14 reduziert. So wird die Belastung des Fensters 18 klein gehalten. Es ist auch möglich, dass das Probe-Fluid eingebracht oder gewechselt wird, wenn die Experimentierzelle 10 bereits mit der Vakuumkammer 24 verbunden ist. Der Druck p14 im Probenraum 14 kann auch bereits vor Einbringen in die Vakuumkammer reduziert werden.

Figur 3a zeigt einen Querschnitt durch eine Experimentierzelle 10, die eine elektrische Kontaktierung 60 aufweist. Die Kontaktierung umfasst im vorliegenden Fall vier elektrische Kontakte 62.1, 62.2, 62.3, 62.4. Über diese Kontakte 62 kann ein elektrisches Potential an das Fluid und/oder die Fluid-Grenzschicht angelegt werden.

Figur 3b zeigt eine Seitenansicht auf die Schnittfläche. Figur 3c zeigt eine Ansicht von oben. Es ist zu erkennen, dass zwei Deckel 64.1, 64.2 vorhanden sind, mittels derer die Zuleitung 40 (vgl. Figur 3a) und eine weitere Zuleitung 66 verschlossen sind.

Figur 4a zeigt eine perspektivische Ansicht einer erfindungsgemäßen Experimentierzelle 10, bei der die Druckeinstellvorrichtung 28 eine Druckausgleichsmembran 68 umfasst. Eine Seite der Druckausgleichsmembran 68 steht in Fluidverbindung mit dem Probenraum 14, die andere Seite mit der Umgebung. Ist der Druck im Probenraum 14 größer als in der Umgebung, wölbt sich die Druckausgleichsmembran 68 nach außen, sodass sich der Druck im Probenraum 14 verringert. Ist der Druck im Probenraum 14 kleiner als in der Umgebung, wölbt sich die Druckausgleichsmembran 68 nach innen, sodass sich der Druck im Probenraum 14 erhöht. Auf diese Weise stellt sich der Druck p₁₄ im Probenraum 14 selbsttätig ein. In anderen Worten lässt sich der Druck p₁₄ im Probenraum 14 durch Verändern des Umgebungsdrucks einstellen.

Der Drucksensor 58 erstreckt sich von einer Position außerhalb eines Gehäuses 70 bis zum Probenraum. Es ist möglich, dass der Drucksensor 58 ein analoges Signal anzeigt. Alternativ oder zusätzlich ist es möglich, dass der Drucksensor 58 ein elektrisches Signal abgibt. Mittels des Drucksensors 58 ist eine Druckdifferenz zu einer Umgebung 72 bestimmbar.

**Bezugszeichenliste**

| | | | |
|---|---|---|---|
| 10 | Experimentierzelle | 58 | Drucksensor |
| 12 | Probe-Fluid | | |
| 14 | Proberaum | | |
| 16 | Strahlung, Primärstrahl | 60 | elektrische Kontaktierung |
| 18 | Fenster | 62 | Kontakt |
| | | 64 | Deckel |
| 20 | Fluid-Grenzschicht | 66 | Zuleitung |
| 22 | Strahlungsquelle | 68 | Druckausgleichsmembran |
| 24 | Vakuumkammer | | |
| 26 | Kammerfenster | 70 | Gehäuse |
| 28 | Druckeinstell-Vorrichtung | 72 | Umgebung |
| | | | |
| 30 | Stellelement | d | Dicke |
| 34 | Gewindespindel | p₁₄ | Druck im Proberaum |
| 36 | Zylinder | V₁₄ | Volumen des Proberaums |
| 38 | Kolben | | |
| | | | |
| 40 | Zuleitung | | |
| 42 | Ventil | | |
| 44 | Spektroskopie-Vorrichtung | | |
| 46 | Detektor | | |
| 48 | zweiter Detektor | | |
| | | | |
| 50 | zweites Fenster | | |
| 52 | dritter Detektor | | |
| 54 | vierter Detektor | | |
| 56 | Kanal | | |

## Patentansprüche

1. Experimentierzelle (10), die ausgebildet ist zum Verbinden mit einer Spektroskopie-Vorrichtung, zur Untersuchung von Fluiden und/oder Fluid-Grenzschichten (20), mit
(a) einem geschlossenen Probenraum (14) zum Aufnehmen eines Probe-Fluids (12), insbesondere eines Probe-Gases oder einer Probe-Flüssigkeit, und
(b) zumindest einem Fenster (18), das für elektromagnetische Strahlung durchsichtig ist,
**gekennzeichnet durch**
(c) eine Druckeinstellvorrichtung (28) zum Einstellen des Drucks (p₁₄) im Probenraum (14).

2. Experimentierzelle (10) nach Anspruch 1, **dadurch gekennzeichnet, dass** die Druckeinstellvorrichtung (28) ein Stellelement (30) aufweist, mittels dem ein Volumen des Probenraums (14) veränderbar ist.

3. Experimentierzelle (10) nach einem der vorstehenden Ansprüche, **gekennzeichnet durch** eine Membran, die mit dem Probenraum (14) und einer Umgebung (72) der Experimentierzelle (10) in Verbindung steht, sodass sich der Druck im Probenraum (14) dem Umgebungsdruck anpasst.

4. Experimentierzelle (10) nach einem der vorstehenden Ansprüche, **dadurch gekennzeichnet, dass** der Probenraum (14) atmosphären- und vakuumkompatibel verschließbar ausgebildet ist.

5. Experimentierzelle (10) nach einem der vorstehenden Ansprüche, **dadurch gekennzeichnet, dass** das Fenster (18) austauschbar ist und/oder eine Dicke (d) von höchstens 200 µm, insbesondere 200 nm, hat.

6. Experimentierzelle (10) nach einem der vorstehenden Ansprüche, **dadurch gekennzeichnet, dass** das Fenster (18) eine vertikal und/oder lateral strukturierte Beschichtung aufweist.

7. Experimentierzelle (10) nach einem der vorstehenden Ansprüche, **gekennzeichnet durch** eine Temperaturregelung zum Regeln einer Temperatur des Probe-Fluids (12) auf eine vorgegebene Soll-Temperatur.

8. Experimentierzelle (10) nach einem der vorstehenden Ansprüche, **gekennzeichnet durch** eine elektrische Kontaktierung (60) des Innenraums und/oder eine elektrisch leitfähige Beschichtung einer Fensterinnenseite.

9. Spektroskopie-Vorrichtung (44) mit
(i) einer Strahlungsquelle (22) zum Abgeben von elektromagnetischer Strahlung,
(ii) einer Experimentierzelle (10) nach Anspruch 1, deren Fenster (18) für diese Strahlung durchsichtig ist, und
(iii) einem Detektor (46) zum Erfassen von Strahlung, die durch das Fenster (18) eingetreten ist und mit dem Probe-Fluid (12), das in dem Probenraum (14) vorhanden ist, gewechselwirkt hat.

10. Spektroskopie-Vorrichtung (44) nach Anspruch 9, **dadurch gekennzeichnet, dass**
(i) die Experimentierzelle (10) ein zweites Fenster (50) aufweist, das für die Strahlung durchsichtig ist,
(ii) die Strahlungsquelle angeordnet ist zum Durchstrahlen des ersten Fensters (18) und des zweiten Fensters (50) und dass
(iii) die Spektroskopie-Vorrichtung (44) eine Detektorvorrichtung zum Erfassen von Strahlung, die durch das erste Fenster (18) eingetreten und aus dem zweiten Fenster (50) ausgetreten ist, aufweist.

11. Spektroskopie-Vorrichtung (44) nach Anspruch 9, **gekennzeichnet durch** eine Vakuumkammer (24),
wobei die Experimentierzelle (10) in die Kammer eingebracht ist und das Fenster (18) den Probenraum (14) vom Vakuum trennt.

12. In-situ-Spektroskopierverfahren mit den Schritten:
(a) Einbringen eines Probe-Fluids (12) in den Probenraum (14) einer Experimentierzelle (10) nach einem der vorstehenden Ansprüche,
(b) Verringern des Drucks in der Experimentierzelle (10) mittels der Druckeinstellvorrichtung (28) und
(c) Anlegen eines Vakuums an eine dem Fluid abgewandte Seite des Fensters (18).

13. In-situ-Spektroskopierverfahren nach Anspruch 12, **dadurch gekennzeichnet, dass**
ein Innendruck in der Experimentierzelle (10) vor dem Anlegen des Vakuums an der dem Fluid abgewandten Seite des Fensters kleiner ist als ein Umgebungsdruck.

## Geänderte Patentansprüche

### Geänderte Patentansprüche gemäss Regel 137(2) EPÜ.

1. Experimentierzelle (10), die ausgebildet ist zum Verbinden mit einer Spektroskopie-Vorrichtung, zur Untersuchung von Fluiden und/oder Fluid-Grenzschichten (20), mit
(a) einem geschlossenen Probenraum (14) zum Aufnehmen eines Probe-Fluids (12), insbesondere eines Probe-Gases oder einer Probe-Flüssigkeit,
(b) zumindest einem Fenster (18), das für elektromagnetische Strahlung durchsichtig ist, und
(c) eine Druckeinstellvorrichtung (28) zum Einstellen des Drucks (p₁₄) im Probenraum (14),
**dadurch gekennzeichnet, dass**
(d) die Druckeinstellvorrichtung (28) ein Stellelement (30) aufweist, mittels dem ein Volumen des Probenraums (14) veränderbar ist.

2. Experimentierzelle (10) nach Anspruch 1, **gekennzeichnet durch** eine Membran, die mit dem Probenraum (14) und einer Umgebung (72) der Experimentierzelle (10) in Verbindung steht, sodass sich der Druck im Probenraum (14) dem Umgebungsdruck anpasst.

3. Experimentierzelle (10) nach Anspruch 1 oder 2, **dadurch gekennzeichnet, dass** der Probenraum (14) atmosphären- und vakuumkompatibel verschließbar ausgebildet ist.

4. Experimentierzelle (10) nach einem der vorstehenden Ansprüche, **dadurch gekennzeichnet, dass** das Fenster (18) austauschbar ist und/oder eine Dicke (d) von höchstens 200 µm, insbesondere 200 nm, hat.

5. Experimentierzelle (10) nach einem der vorstehenden Ansprüche, **dadurch gekennzeichnet, dass** das Fenster (18) eine vertikal und/oder lateral strukturierte Beschichtung aufweist.

6. Experimentierzelle (10) nach einem der vorstehenden Ansprüche, **gekennzeichnet durch** eine Temperaturregelung zum Regeln einer Temperatur des Probe-Fluids (12) auf eine vorgegebene Soll-Temperatur.

7. Experimentierzelle (10) nach einem der vorstehenden Ansprüche, **gekennzeichnet durch** eine elektrische Kontaktierung (60) des Innenraums und/oder eine elektrisch leitfähige Beschichtung einer Fensterinnenseite.

8. Spektroskopie-Vorrichtung (44) mit
(i) einer Strahlungsquelle (22) zum Abgeben von elektromagnetischer Strahlung,
(ii) einer Experimentierzelle (10) nach Anspruch 1, deren Fenster (18) für diese Strahlung durchsichtig ist, und
(iii) einem Detektor (46) zum Erfassen von Strahlung, die durch das Fenster (18) eingetreten ist und mit dem Probe-Fluid (12), das in dem Probenraum (14) vorhanden ist, gewechselwirkt hat.

9. Spektroskopie-Vorrichtung (44) nach Anspruch8, **dadurch gekennzeichnet, dass**
(i) die Experimentierzelle (10) ein zweites Fenster (50) aufweist, das für die Strahlung durchsichtig ist,
(ii) die Strahlungsquelle angeordnet ist zum Durchstrahlen des ersten Fensters (18) und des zweiten Fensters (50) und dass
(iii) die Spektroskopie-Vorrichtung (44) eine Detektorvorrichtung zum Erfassen von Strahlung, die durch das erste Fenster (18) eingetreten und aus dem zweiten Fenster (50) ausgetreten ist, aufweist.

10. Spektroskopie-Vorrichtung (44) nach Anspruch 8, **gekennzeichnet durch** eine Vakuumkammer (24),
wobei die Experimentierzelle (10) in die Kammer eingebracht ist und das Fenster (18) den Probenraum (14) vom Vakuum trennt.

11. In-situ-Spektroskopierverfahren mit den Schritten:
(a) Einbringen eines Probe-Fluids (12) in den Probenraum (14) einer Experimentierzelle (10) nach einem der vorstehenden Ansprüche,
(b) Verringern des Drucks in der Experimentierzelle (10) mittels der Druckeinstellvorrichtung (28) und
(c) Anlegen eines Vakuums an eine dem Fluid abgewandte Seite des Fensters (18).
**dadurch gekennzeichnet, dass**
(d) ein Innendruck in der Experimentierzelle (10) vor dem Anlegen des Vakuums an der dem Fluid abgewandten Seite des Fensters kleiner ist als ein Umgebungsdruck.
